# EUROPÄISCHE PATENTSCHRIFT

(11) **EP 1 090 246 B1**
(45) Veröffentlichungstag und Bekanntmachung des Hinweises auf die Patenterteilung: **31.08.2005**
(21) Anmeldenummer: 99931164.0
(22) Anmeldetag: 24.06.1999
(51) Int. Cl.: F16L 37/00

(54) **SCHLAUCHKUPPLUNG MIT FILTEREINSATZ**
FLUID LINE
CANALISATION DE FLUIDE

(30) Priorität: 24.06.1998 DE 29811141 U
(43) Veröffentlichungstag der Anmeldung: 11.04.2001
(73) Patentinhaber: Weh, Erwin, D-89257 Illertissen (DE); WEH, Wolfgang, D-89257 Illertissen (DE)
(72) Erfinder: Weh, Erwin, D-89257 Illertissen (DE); WEH, Wolfgang, D-89257 Illertissen (DE)
(74) Vertreter: Fiener, Josef
(86) Internationale Anmeldenummer: PCT/EP1999/004384
(87) Internationale Veröffentlichungsnummer: WO 1999/067564

(56) Entgegenhaltungen:
- DE-A- 3 842 436
- DE-A- 4 335 451
- DE-B- 1 174 640
- US-A- 4 018 686
- US-A- 4 707 262
- US-A- 4 894 156

## Beschreibung

Die Erfindung betrifft eine Fluidleitung für die Übertragung von gasförmigen und/oder flüssigen Fluiden, insbesondere zum Betanken von Kraftfahrzeugen, gemäß den oberbegrifflichen Merkmalen des Anspruches 1.

Mit derartigen Fluidleitungen (z.B. gemäß der DE-A-4 335 451) soll eine sichere und schnelle Übertragung eines Fluids von einer Druckquelle, beispielsweise von einer Betankungsanlage aus, erreicht werden. Wichtig ist hierbei die sichere Bedienung und einfache Wartung, wozu ein Filterelement auswechselbar angeordnet ist, wie beispielsweise die DE 38 42 436, die dem Oberbegriff des anspruchs 1 entspricht, zeigt.

Bei der EP-A-0 340 879 des Anmelders sind bei einer Schnellanschlußkupplung mit einem Gehäuse und einem Fluideinlaß bzw. Fluidauslaß mehrere Ventile vorgesehen, um eine sichere Abdichtung der Fluidleitung bis zur vollständigen Herstellung der Verbindung zu gewährleisten. Diese Ventile der Schnellanschlußkupplung sind relativ schmutzempfindlich, so daß im allgemeinen ein oder mehrere Filterelemente erforderlich sind. Diese sind in regelmäßigen Abständen zu reinigen, so daß die Kupplung zerlegt werden muß.

Derartige Schnellanschlußkupplungen haben sich aufgrund der hohen Sicherheit bei der Gasbetankung von Fahrzeugen bewährt. Infolge der zunehmenden Verbreitung der Gasfahrzeuge wird jedoch nicht nur eine Betankung durch qualifiziertes Tankstellenpersonal, sondern auch durch den Fahrer selbst durchgeführt, beispielsweise an haus- oder firmeneigenen Betankungsstationen, die ebenfalls der regelmäßigen Wartung bedürfen. Hierbei könnte es zu Unfällen kommen, wenn der Fahrer bzw. die Bedienperson die Anschlußkupplung bzw. Fluidleitung nach einer Reinigung nicht exakt zusammensetzt bzw. das Filterelement falsch montiert. Dabei könnte durch eine unter Druck stehende Gasleitung erheblicher Schaden entstehen. Zudem können trotz entsprechender Sicherheitsventile erhebliche Fluidmengen austreten.

Demzufolge liegt der Erfindung die Aufgabe zugrunde, eine Fluidleitung der eingangs genannten Art hinsichtlich Sicherheit und Montagevereinfachung bei der Wartung, insbesondere Filterwartung, zu verbessern, so daß Gefahren bzw. Schäden vermieden werden.

Diese Aufgabe wird gelöst durch eine Fluidleitung gemäß den Merkmalen des Anspruches 1. Bevorzugte Weiterbildungen der Erfindung sind Gegenstand der abhängigen Ansprüche.

Die vorgeschlagene Fluidleitung zeichnet sich durch eine besonders hohe Sicherheit und einfache (De-) Montage aus, da eine einfache Trennung des Anschlusses erreicht wird, so daß Gefährdungen bzw. Beschädigungen ausgeschlossen werden können. Insbesondere für die bevorzugte Ausführungsform zur Betankung von Kraftfahrzeugen wird mit der vorgeschlagenen Befestigung bzw. Verriegelung beim Lösen der Fluidleitung sicher vermieden, daß das Gas oder Flüssigkeit austreten kann. Dies ist insbesondere aus Unfallschutzgründen wichtig, aber auch zum Umweltschutz, so daß kein erhebliches Gasvolumen verlorengehen kann.

Es sei darauf hingewiesen, daß sich die vorgeschlagene Fluidleitung für verschiedene Anschlüsse eignet, insbesondere für Anschlußkupplungen zur Fahrzeugbetankung. Die Schnellwechseleinheit für das Filterelement kann jedoch auch an beliebiger Stelle einer Fluidleitung eingebaut sein, so daß auf einfache Weise eine sichere und schnelle Trennung der Fluidleitung bei Filterwechsel oder Filterreinigung ermöglicht wird.

Nachfolgend wird ein Ausführungsbeispiel anhand der beiliegenden Zeichnungen näher erläutert und beschrieben. Hierin zeigen:
- Fig. 1: eine bereichsweise Seitenansicht einer Fluidleitung, wobei die Fluidleitung im Längs-Halbschnitt dargestellt ist; und
- Fig. 2: eine entsprechende Ansicht zur Verdeutlichung der Trenn- bzw. Wartungsstellung der Fluidleitung.

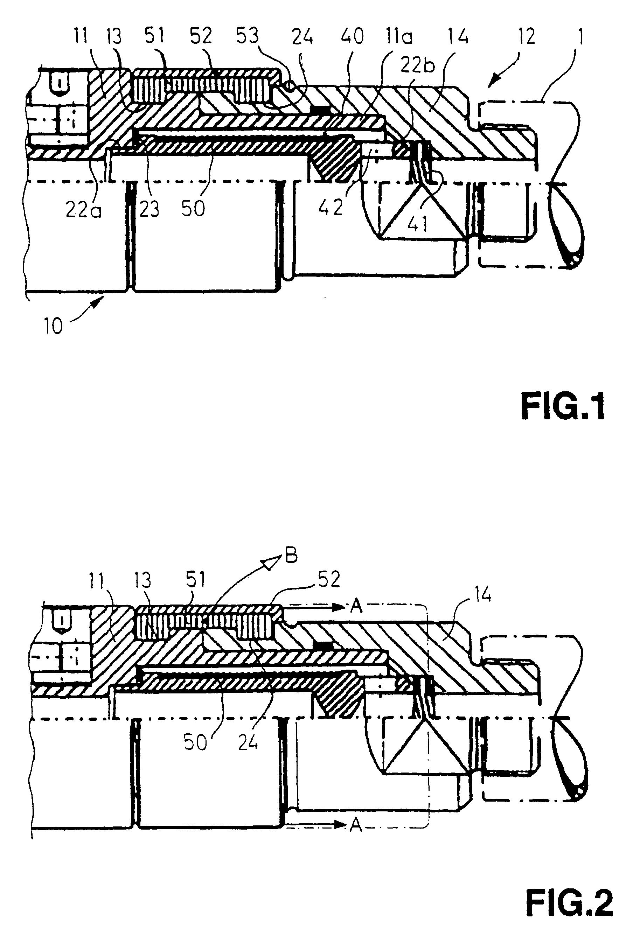

In Fig. 1 ist ein bevorzugtes Ausführungsbeispiel einer Fluidleitung 10 mit einer teilweise dargestellten Schnellanschlußkupplung gezeigt. Diese weist ein rohrförmiges Gehäuse 11 mit einer Gehäuseverlängerung 11a auf, wobei die rechte Stirnseite als Einlaß 12 dient und die linke Stirnseite für die Weiterleitung des zu übertragenden Fluids, beispielsweise an einen nicht dargestellten Anschlußnippel. Der Einlaß 12 zu dem Gehäuse 11 weist einen Anschlußadapter 14 auf, der über eine Dichtung gegen das Gehäuse 11 (genauer: das Gehäuseteil 11a) abgedichtet und relativ dazu drehbar ausgebildet ist. Der Anschlußadapter 14 weist an seinem hier rechten Ende zudem ein Gewinde auf, an das ein Schlauch 1 (oder eine Rohrleitung) zur Zuführung des zu übertragenden Fluids angeschlossen werden kann. Der Anschlußadapter 14 kann hierbei in Anpassung an das zu übertragende Fluid, insbesondere an die jeweils gewünschten Zuführwinkel, Durchlaßquerschnitte usw. beispielsweise auch gekröpft gestaltet sein. Um das Gehäuseteil 11a herum ist eine äußere Übersteckhülse 52 mit einem Verriegelungselement 53 gesichert, das bevorzugt als Sprengring an dem Anschlußadapter 14 befestigt ist. Das Gehäuse 11 weist an seiner inneren Stirnseite einen abgestuften Dichtbund zur Anlage an einer Dichtung 23 auf, so daß das im wesentlichen entlang der Zentralachse vom Schlauch 1 her einströmende gasförmige und/oder flüssige Fluid nicht nach außen hin austreten kann.

Von besonderer Bedeutung ist hierbei ein im Gehäuseteil 11a eingesetztes Filterelement 50, das innerhalb einer Ringkammer 40 eingesetzt ist und von einer Druckfeder 41 axial beaufschlagt ist. Die Druckfeder 41 stützt sich hierbei nach links an einem Bund 22b des Anschlußadapters 14 ab und wirkt nach rechts auf die Dichtung 23 in Nähe einer Ringfläche 22a. Wie aus der Darstellung ersichtlich, steht die Ringkammer 40 mit der inneren Fluidpassage über wenigstens eine Radialbohrung 42 in Verbindung. Die Ringfläche 22a zur Führung des Filterelements 50 wird hierbei von der Druckfeder 41 bis zu dem nach innen abgekröpften Bereich an der Dichtung 23 geschoben, wodurch zugleich ein Anschlag der Verschiebebewegung und eine exakte Abdichtung erreicht wird.

In der Anschlußstellung werden beim radialen Aufstecken der klammerartigen Segmentschalen 51 zwei Halbschalen miteinander in Berührung gebracht, wobei diese formschlüssig in Umfangsnuten 13 und 24 eingreifen und somit das Gehäuse 11 und den Anschlußadapter 14 in Axialrichtung sicher miteinander verbinden. Ebenso gelangt die Dichtung 23 in Anlage zum Filterelement 50, wodurch ein Austreten von Fluid vermieden wird. Die Halbschalen 51 werden durch die Übersteckhülse 52 aufgenommen und durch das Verriegelungselement 53 zusammengehalten. Dabei ist das Filterelement 50 im wesentlichen nur gegen die Federkraft der Druckfeder 41 nach links verschoben, die somit die Anpreßkraft der Dichtung definiert.

In der Trenn- bzw. Wartungsstellung gemäß Fig. 2 wird die Übersteckhülse 52 nach rechts (Pfeil A) in die strichlierte Position gezogen, nämlich nach Lösen des Verriegelungselements 53. Sodann sind die Segment- bzw. Halbschalen 51, wie an sich aus dem DE-GM 89 10 276 bekannt, in Radialrichtung (Pfeil B) herausnehmbar, so daß der Anschlußadapter 14 vom Gehäuse 11 gelöst werden kann, insbesondere um das Filterelement 50 auszutauschen. Es sei darauf hingewiesen, daß dabei das Filterelement 50 an den Ringflächen 22a und 22b in ihren wirksamen Flächen geführt ist, so daß dieses im Gehäuse 11 exakt fixiert ist und sich in eindeutig festgelegter Stellung befindet. Hierdurch wird eine besonders zuverlässige Abdichtung der Fluidleitung 10 erreicht. Zum Trennen der Fluidleitung 10 wird somit nur die Übersteckhülse 52 zurückgezogen, so daß nach einem kurzen Weg die Segmentschalen 51 radial nach außen entnommen werden können.

Diese Gestaltung erlaubt somit ein einfaches Trennen der Fluidleitung 10, wobei die Segmentschalen 51 bei der Wiedermontage eine sichere Verbindung und Abdichtung sicherstellen. Von Bedeutung ist insbesondere die Schnellwechselbarkeit des Filterelementes 50, das im Gehäuse 11 befestigt ist. Das Filterelement 50 ist somit in den Anschlußadapter 14 mittels der umgreifenden Halbschalen 51 zugsicher eingesetzt, die von einer Übersteckhülse 52 in Radialrichtung gesichert sind. Nach Lösen eines Stiftes oder des hier bevorzugten Sprengrings als Verriegelungselement 53 können die vorstehenden Bauteile 52 und 51 abgenommen werden, um von Zeit zu Zeit einen Filterwechsel in einfacher Weise durchzuführen.

## Patentansprüche

1. Fluidleitung für die Übertragung von gasförmigen und/oder flüssigen Fluiden, insbesondere zum Betanken von Fahrzeugen, umfassend ein rohrförmiges Gehäuse (11, 11a), ein darin eingesetztes Filterelement (50) und einen sich an das Gehäuse (11, 11a) anschließenden Anschlussadapter (14), wobei an dem Gehäuse (11, 11a) eine Übersteckhülse (52) angeordnet ist, die zum Wechseln des Filterelements (50) beweglich gelagert ist, und am Gehäuse (11, 11a) ansetzbare Segmentschalen (51) zum Zusammenhalten des Gehäuses (11, 11a) und des Anschlussadapters (14) vorgesehen sind, **dadurch gekennzeichnet, dass**
die Segmentschalen (51) als einander gegenüberliegende Halbschalen ausgebildet sind, die durch die Übersteckhülse (52) in ihrer Lage gesichert sind.

2. Fluidleitung nach Anspruch 1, **dadurch gekennzeichnet, dass**
das Filterelement (50) von einer in Längsrichtung der vom rohrförmigen Gehäuse (11, 11a) gebildeten Ringkammer (40) wirkenden Druckfeder (41) beaufschlagt wird.

3. Fluidleitung nach Anspruch 2, **dadurch gekennzeichnet, dass**
entlang der Fluidpassage an die Ringkammer (40) anschließend ein gegenüber dem Gehäuse (11, 11 a) verdrehbarer Anschlussadapter (14) vorgesehen ist.

4. Fluidleitung nach einem der Ansprüche 1 bis 3, **dadurch gekennzeichnet, dass**
das Filterelement (50) mittels einer Ringfläche (22a) zumindest an der Innenfläche des Gehäuses (11) geführt ist und gegenüberliegend ein Bund (22b) angeordnet ist.

5. Fluidleitung nach Anspruch 3 und 4, **dadurch gekennzeichnet, dass**
der Bund (22b) in dem Anschlussadapter (14) angeordnet ist.

6. Fluidleitung nach einem der Ansprüche 1 bis 5, **dadurch gekennzeichnet, dass**
das Filterelement (50) als zylindrische Filterhülse ausgebildet ist.

7. Fluidleitung nach einem der Ansprüche 1 bis 6, **dadurch gekennzeichnet, dass**
in dem Gehäuse (11, 11a) wenigstens eine Dichtung (23) in Anlage zum Filterelement (50) angeordnet ist.

8. Fluidleitung nach einem der Ansprüche 1 bis 7, **dadurch gekennzeichnet, dass**
am Gehäuse (11, 11a) zum Sichern der Übersteckhülse (52) ein Verriegelungselement (53) vorgesehen ist, das bevorzugt als Sprengring ausgebildet ist.

9. Fluidleitung nach einem der Ansprüche 1 bis 8, **dadurch gekennzeichnet, dass**
die Segmentschalen (51) in symmetrisch ausgebildeten Umfangsnuten (13, 24) am Gehäuse (11, 11a), insbesondere am Einlass einer Schnellanschlusskupplung, und am Anschlussadapter (14) formschlüssig eingreifen.

## Claims

1. A fluid line for transferring gaseous and/or liquid fluids, especially for fuelling vehicles, comprising a tubular housing (11, 11a), a filter element (50) mounted therein, and a connecting adapter (14) connecting to the housing (11, 11a), wherein a slide-over sleeve (52) is arranged on the housing (11, 11a), which sleeve is movably held therein for exchanging the filter element (50), and segment shells (51) are provided, which can be placed on the housing (11, 11 a) to hold together the housing (11, 11 a) and the connecting adapter (14),
**characterised in that**
the segment shells (51) are arranged as mutually oppositely disposed semimonocoque shells being secured in position by the slide-over sleeve (52).

2. A fluid line as claimed in claim 1, **characterised in that** the filter element (50) is pressurised by a pressure spring (41) acting in a longitudinal direction of the annular chamber (40) formed by the tubular housing (11, 11 a).

3. A fluid line as claimed in claim 2, **characterised in that** a connecting adapter (14) rotatable with respect to the housing (11, 11 a) is provided along the fluid passage, adjacent to the annular chamber (40).

4. A fluid line as claimed in one of the claims 1 to 3, **characterised in that** the filter element (50) is guided at least on the inner surface of the housing (11) by means of an annular surface (22a) and that a collar (22b) is arranged opposite thereto.

5. A fluid line as claimed in claims 3 and 4, **characterised in that** the collar (22b) is arranged in the connecting adapter (14).

6. A fluid line as claimed in one of the claims 1 to 5, **characterised in that** the filter element (50) is arranged as a cylindrical filter sleeve.

7. A fluid line as claimed in one of the claims 1 to 6, **characterised in that** at least one seal (23) is arranged towards the filter element (50) in the housing (11, 11 a).

8. A fluid line as claimed in one of the claims 1 to 7, **characterised in that** a locking element (53) is provided on the housing (11, 11 a) to secure the slide-over sleeve (52), which element is preferably arranged as a retaining ring.

9. A fluid line as claimed in one of the claims 1 to 8, **characterised in that** the segment shells (51) engage in an interlocked way in symmetrically arranged circumferential grooves (13, 24) on the housing (11, 11a), particularly at the inlet to a quick-connection coupling, and on the connecting adapter (14).

## Revendications

1. Conduite de fluide pour la transmission de fluides gazeux et/ou liquides, en particulier pour approvisionner en carburant des véhicules, comprenant un boîtier tubulaire (11, 11a), un élément filtrant (50) inséré dans ce boîtier, et un raccord adaptateur (14) faisant suite au boîtier (11, 11a), sachant qu'une douille (52) emboîtable en recouvrement est disposée sur le boîtier (11, 11a), douille qui est montée à déplacement afin de remplacer l'élément filtrant (50), et que des coques segmentées (51) pouvant être rapportées sur le boîtier (11, 11a) sont prévues pour maintenir assemblés le boîtier (11, 11a) et le raccord adaptateur (14), **caractérisée en ce que** les coques segmentées (51) sont réalisées sous la forme de demi-coques en vis-à-vis, qui sont assujetties dans leur position par la douille (52) emboîtable en recouvrement.

2. Conduite de fluide selon la revendication 1, **caractérisée en ce que** l'élément filtrant (50) est sollicité par un ressort de pression (41) agissant dans la direction longitudinale de la chambre annulaire (40) formée par le boîtier tubulaire (11, 11a).

3. Conduite de fluide selon la revendication 2, **caractérisée en ce qu'**il est prévu un raccord adaptateur (14) qui est rotatif par rapport au boîtier (11, 11a) et qui fait suite à la chambre annulaire (40) le long du passage de fluide.

4. Conduite de fluide selon l'une des revendications 1 à 3, **caractérisée en ce que** l'élément filtrant (50) est, au moyen d'une surface annulaire (22a), guidé au moins sur la surface intérieure du boîtier (11), et un collet (22b) est disposé en vis-à-vis.

5. Conduite de fluide selon les revendications 3 et 4, **caractérisée en ce que** le collet (22b) est disposé dans le raccord adaptateur (14).

6. Conduite de fluide selon l'une des revendications 1 à 5, **caractérisée en ce que** l'élément filtrant (50) est réalisé sous forme de manchon filtrant cylindrique.

7. Conduite de fluide selon l'une des revendications 1 à 6, **caractérisée en ce qu'**au moins un joint d'étanchéité (23) est disposé dans le boîtier (11, 11a), en application vers l'élément filtrant (50).

8. Conduite de fluide selon l'une des revendications 1 à 7, **caractérisée en ce qu'**un élément de verrouillage (53), qui est de préférence réalisé sous forme de jonc d'arrêt, est prévu sur le boîtier (11, 11a) afin d'assujettir la douille (52) emboîtable en recouvrement.

9. Conduite de fluide selon l'une des revendications 1 à 8, **caractérisée en ce que** les coques segmentées (51) s'engagent positivement dans des rainures circonférentielles (13, 24) symétriquement réalisées sur le boîtier (11, 11a), notamment à l'entrée d'un accouplement rapide, et sur le raccord adaptateur (14).
